# EUROPÄISCHE PATENTSCHRIFT

(11) **EP 2 981 454 B1**
(45) Veröffentlichungstag und Bekanntmachung des Hinweises auf die Patenterteilung: **03.05.2017**
(21) Anmeldenummer: 14710229.7
(22) Anmeldetag: 10.03.2014
(51) Int. Cl.: B62M 17/00, B62M 23/02, B62M 7/00

(54) **RANGIEREINRICHTUNG FÜR FAHRZEUGE**
MANOEUVRING SYSTEM FOR MOTOR VEHICLES
DISPOSITIF DE GARAGE POUR VÉHICULES

(30) Priorität: 03.04.2013 DE 102013205829
(43) Veröffentlichungstag der Anmeldung: 10.02.2016
(73) Patentinhaber: Bayerische Motoren Werke Aktiengesellschaft, 80809 München (DE)
(72) Erfinder: HUBER, Michael, 85419 Mauern (DE); PONGRATZ, Karl, 85368 Moosburg (DE)
(86) Internationale Anmeldenummer: PCT/EP2014/054557
(87) Internationale Veröffentlichungsnummer: WO 2014/161703

(56) Entgegenhaltungen:
- CN-Y- 200 971 151
- DE-A1- 3 641 446
- DE-A1-102009 043 326
- DE-U1- 8 336 707
- US-A- 4 923 028

## Beschreibung

Die Erfindung betrifft eine Rangiereinrichtung für ein- oder mehrspurige Fahrzeuge mit einem Elektromotor und einer Abtriebseinrichtung, die mit einem Getriebe des Fahrzeugs derart koppelbar ist, dass mit Hilfe des Elektromotors das Fahrzeug zumindest rückwärts bewegbar ist.

Im Allgemeinen weisen Motorräder als Antrieb einen Verbrennungsmotor auf, der mit einem Getriebe verbunden ist. Das Getriebe umfasst lediglich Vorwärtsgänge, so dass Motorräder mit Hilfe des Verbrennungsmotors nur in Vorwärtsrichtung angetrieben werden können. Sofern Motorräder rückwärts bewegt werden müssen, wie dies beispielsweise beim Rangieren notwendig werden kann, muss dies in der Regel durch Menschenkraft geschehen. Dabei wird das Motorrad in rückwärtiger Richtung geschoben. Hierbei ergeben sich insbesondere dann Schwierigkeiten, wenn das Motorrad ein hohes Eigengewicht aufweist oder wenn das Motorrad mit mindestens einem seiner Räder auf ein Hindernis, beispielsweise Bordsteine, Mulden oder dergleichen stößt. Auch ein Gefälle der Fahrbahn kann dazu führen, dass die menschliche Kraft nicht ausreicht, um eine rückwärtige Bewegung des Motorrads zu erzeugen.

Um dieses Problem zu umgehen, werden im Stand der Technik Motorräder, die ein hohes Eigengewicht aufweisen, mit einem Getriebe versehen, das einen Rückwärtsgang aufweist. Aus der DE 10 2009 043 326 B4 ist eine Fahrzeugrückwärtsfahrvorrichtung bekannt, bei der mittels des Startermotors, der üblicherweise zum Starten der Brennkraftmaschine verwendet wird, ein Schaltgetriebe derart angetrieben wird, dass eine Rückwärtsbewegung des Motorrads erzeugt wird. Ein alternatives Rückfahr-Zusatzgetriebe für Motorrad-Triebwerke ist aus der G 83 36 707.1 bekannt. Solche Systeme weisen jedoch eine hohe Bauteilzahl auf. Ferner sind solche Systeme nicht nachrüstbar und dadurch an die Verwendung an einem spezifischen Motorradmodell beschränkt.

Aus der gattungsgemäßen US 4,923,028 ist ein Motorrad bekannt, das durch die Antriebskraft eines Rückwärtsantriebsmotors rückwärts angetrieben werden kann, wobei der Rückwärtsantriebsmotor mit dem Hinterrad des Fahrzeugs koppelbar ist. Die Anordnung ist insbesondere für die Nachrüstung an bestehende Motorräder gedacht.

Ausgehend von diesem Stand der Technik macht es sich die vorliegende Erfindung zur Aufgabe, eine vereinfachte Rangiereinrichtung anzugeben, mit der die Nachteile des Standes der Technik überwunden werden. Ferner ist es Aufgabe der Erfindung, eine Rangiereinrichtung anzugeben, mit einer reduzierten Anzahl an Bauteilen, die sich dadurch auszeichnet, dass sie besonders leicht an eine Vielzahl verschiedener Motorrad-Varianten nachrüstbar ist.

Diese Aufgabe wird durch eine Rangiereinrichtung mit den Merkmalen des unabhängigen Anspruchs gelöst. Die abhängigen Ansprüche stellen vorteilhafte Ausführungsformen der Erfindung dar.

Zur Lösung dieser Aufgabe schlägt die Erfindung eine Rangiereinrichtung für ein- oder mehrspurige Fahrzeuge mit einem Elektromotor und einer Abtriebseinrichtung vor, die mit einem Getriebe des Fahrzeugs derart koppelbar ist, dass mit Hilfe des Elektromotors das Fahrzeug zumindest rückwärts bewegbar ist. Weiterhin kann der Elektromotor über eine biegsame Welle mit der Abtriebseinrichtung verbunden sein. Einspurige Fahrzeuge sind im Sinne der Erfindung Motorräder und Motorroller. Mehrspurige Fahrzeuge haben an der vorderen Achse und/oder an der hinteren Achse zwei nebeneinander parallel angeordnete Räder oder Kufen, wie beispielsweise Schneemobile, Trikes sowie Quads. Obwohl die Erfindung insbesondere für den Einsatz bei schwergewichtigen Motorrädern gedacht ist, kann sie ohne Einschränkungen auch für leichtere Motorräder zum Einsatz kommen, bis hin zu Motorrollern, die heutzutage auch in Varianten erhältlich sind, die ein verhältnismäßig hohes Eigengewicht aufweisen. Durch die Verwendung einer biegsamen Welle als Verbindungselement zwischen dem Elektromotor und der Abtriebseinrichtung kann eine hohe Variabilität bezüglich der Package-Anforderungen des Motorrads generiert werden. Biegsame Wellen im Sinne der Erfindung sind flexible Wellen, wie sie im Einsatz als Tachowellen oder von Cabriolet-Verdecken her bekannt sind. Diese Wellen weisen eine äußere Schutzummantelung auf, in deren Inneren sich eine Drahtwelle um die Längsachse drehen kann und dadurch eine Rotationsbewegung von einem ersten Ende der Welle zu einem zweiten Ende der Welle überträgt.

Darüber hinaus kann eine Abtriebswelle des Elektromotors über ein Zahnradpaar mit der flexiblen Welle verbunden sein. Dies bietet den Vorteil, dass unmittelbar in der Antriebseinheit, die den Elektromotor und ein erstes Ende der flexiblen Welle umfasst, eine erste Getriebestufe mit einer Über- oder Untersetzung realisiert werden kann.

Ferner kann die Abtriebseinheit eine erste Getriebestufe und eine zweite Getriebestufe umfassen, wobei ein Drehmoment von der biegsamen Welle zur ersten Getriebestufe, von der ersten Getriebestufe zu der zweiten Getriebestufe und von der zweiten Getriebestufe zu einer Abtriebswelle übertragbar ist. Dadurch kann vom zweiten Ende der flexiblen Welle zum Fahrzeuggetriebe hin eine Über- oder Untersetzung realisiert werden.

Die Rangiereinrichtung kann ferner über einen Aktuator mit dem Getriebe des Fahrzeugs koppelbar und/oder entkoppelbar sein. Derartige Aktuatoren sind elektromechanische Stellmotoren oder Magnetventile und können wahlweise an der Abtriebseinheit angeflanscht oder integral mit der Einheit verbaut werden.

In einer ersten Alternative der Erfindung kann der Elektromotor ein separater Elektromotor sein, wobei je nach Antriebsrichtung des Elektromotors sich auch die Drehrichtung der flexiblen Welle ändert und dadurch das Motorrad eine Vorwärtsbewegung oder eine Rückwärtsbewegung durchführen kann.

In einer zweiten Alternative der Erfindung ist der Elektromotor gleichzeitig der Anlassermotor, der auch zum Starten einer fahrzeugeigenen Brennkraftmaschine verwendet wird. Dies bietet den Vorteil, dass der bereits am Verbrennungsmotor vorgesehene Anlasser als Elektromotor verwendet werden kann, wodurch sich die Anzahl der für die Rangiereinrichtung verwendeten Bauteile weiter reduziert. Üblicherweise wird als Anlassermotor ein Gleichstrommotor verwendet. Da der elektrische Massepol über die Karosseriestruktur des Motorrads gebildet wird, kann die Polarität und damit die Drehrichtung des Anlassermotors nicht verändert werden. Erfindungsgemäß soll jedoch der Anlassermotor auch in beide Drehrichtungen seiner Abtriebsachse rotieren können. In diesem Fall muss der Massepol separat ausgeführt werden und darf nicht über die Karosseriestruktur des Motorrads verlaufen.

Zusätzlich oder alternativ kann eine Funktionssperre vorgesehen sein, die eine Kopplung der Rangiereinrichtung an das Getriebe des Fahrzeugs verhindert, wenn das Getriebe des Fahrzeugs nicht in einer Leerlaufstellung ist und eine Kopplung der Rangiereinrichtung an das Getriebe des Fahrzeugs zulässt, wenn das Getriebe in einer Leerlaufstellung ist. Dadurch kann sichergestellt werden, dass ein Fahrer die Rangiereinrichtung nicht aktivieren kann, wenn an dem Getriebe des Fahrzeugs eine der Vorwärtsgänge eingelegt ist. Ein weiteres Kriterium für die Sperrung der Rangiereinrichtung kann die Geschwindigkeit des Motorrads sein. Sofern das Motorrad sich mit einer Geschwindigkeit fortbewegt, die über einem vorbestimmten Schwellenwert, beispielsweise 6 km/h oder bevorzugt 3 km/h oder besonders bevorzugt 1,6 km/h liegt, wird die Aktivierung der Rangiereinrichtung durch die Funktionssperre verhindert, selbst wenn das Getriebe des Fahrzeugs in einer Leerlaufstellung ist. Dadurch kann verhindert werden, dass bei Schaltvorgängen, in denen das Getriebe kurzzeitig in einer Leerlaufstellung ist, die Rangiereinrichtung fälschlicherweise aktiviert wird.

Das Vorsehen eines gesonderten Elektromotors bringt darüber hinaus den Vorteil, dass die Rangiereinrichtung auch bei stehendem Verbrennungsmotor des Motorrads betrieben werden kann. Dies ist nicht möglich bei der Verwendung des Anlassermotors als Antriebsmotor der Antriebseinheit der Rangiereinrichtung, denn der Anlassermotor würde stets den Verbrennungsmotor starten.

Die Funktionssperre wirkt mechanisch oder elektrisch auf den Aktuator, um eine Kopplung an das Getriebe des Fahrzeugs zu ermöglichen oder zu verhindern.

Darüber hinaus kann die Abtriebseinrichtung über eine Kupplungseinrichtung, insbesondere einer Klauenkupplung oder eine Stirnverzahnung, die auf das Abtriebsrad der zweiten Getriebestufe wirkt, mit dem Getriebe des Fahrzeugs in Verbindung bringbar sein.

Weiterhin kann die erste Getriebestufe der Abtriebseinrichtung als eine Schneckenradstufe ausgebildet sein. Die Schneckenradstufe bietet den Vorteil eines besonders hohen Drehzahl- bzw. Drehmomentsprunges in der Rangiereinrichtung, wobei gleichzeitig ein Mindestmaß an Bauraum dafür benötigt wird.

In einem weiteren Aspekt betrifft die Erfindung ein- oder mehrspurige Fahrzeuge, insbesondere Motorräder mit einer Rangiereinrichtung nach einem der vorhergehenden Ansprüche.

Im Folgenden sollen die Vorteile der vorliegenden Erfindung kurz zusammengefast werden.

Durch Verwendung einer biegsamen Welle bzw. einer Schneckenradstufe oder durch deren Kombination kann der Bauraumbedarf für die Rangiereinrichtung auf ein Mindestmaß reduziert werden und die Rangiereinrichtung höchst flexibel an eine Vielzahl unterschiedlicher Motorradtypen verbaut werden. Dadurch kann die Rangiereinrichtung auch als Zubehör angeboten und als separate Einheit nachgerüstet werden. Dies erhöht auch den Freiheitsgrad bei der Fertigung des Motorrads, weil dadurch Motorräder mit oder ohne Rückfahrhilfe angeboten werden können.

Im Folgenden wird die Erfindung anhand der Figurenbeschreibung näher erläutert. Die Ansprüche, die Figuren und die Beschreibung enthalten eine Vielzahl von Merkmalen, die im Folgenden im Zusammenhang mit beispielhaft beschriebenen Ausführungsformen der vorliegenden Erfindung erläutert werden. Der Fachmann wird diese Merkmale auch einzeln und in anderen Kombinationen betrachten, um weitere Ausführungsformen zu bilden, die an entsprechende Anwendungen der Erfindung angepasst sind.

Es zeigen in schematischer Darstellung:
- Figur 1: den prinzipiellen Aufbau einer Rangiereinrichtung und
- Figur 2: eine Seitenansicht einer Rangiereinrichtung.

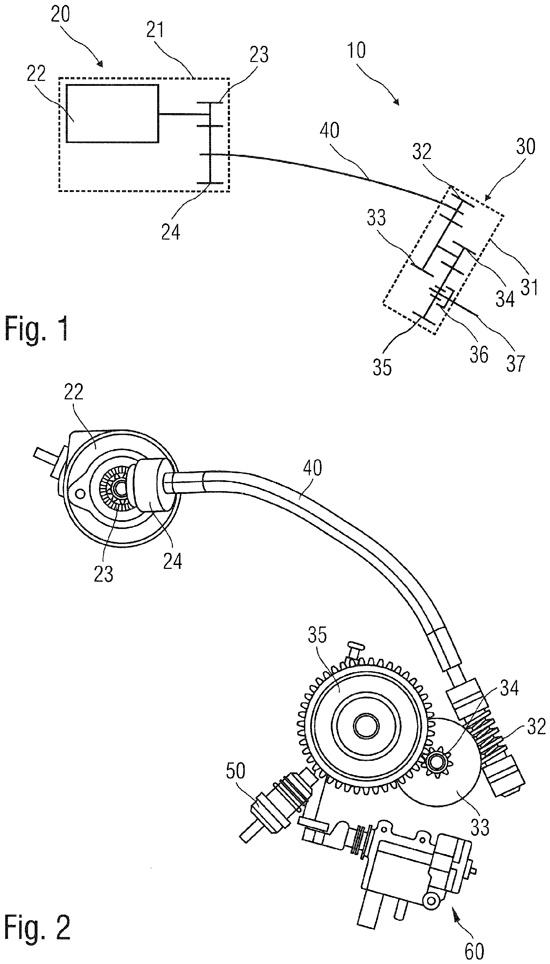

Im Folgenden soll zunächst der prinzipielle Aufbau der Rangiereinrichtung 10 anhand von Figur 1 erläutert werden. Wie bereits im Vorgehenden beschrieben, ist die Rangiereinrichtung für Motorräder, Motorroller, Trikes oder Quads, d.h. im Wesentlichen ein- oder mehrspurige Fahrzeuge gedacht, die über einen Verbrennungsmotor verfügen. Der Verbrennungsmotor ist über ein mechanisches Getriebe mit einem Antriebsrad verbunden und kann eine Vorwärtsbewegung des Fahrzeuges erzeugen. Die Rangiereinrichtung 10 umfasst eine Antriebseinrichtung 20 und eine Abtriebseinrichtung 30. Die Abtriebseinrichtung 30 ist derart ausgestaltet, dass sie an das mechanische Getriebe des Fahrzeugs befestigt werden kann. Die Antriebseinheit 20 kann wahlweise auch an dem Getriebe oder aber auch an anderen Aggregaten des Fahrzeugs, beispielsweise an dem Verbrennungsmotor oder an dem Chassis befestigt werden.

Die Antriebseinheit 20 weist ein Gehäuse 21 auf, das den Elektromotor 22 beinhaltet. Der Elektromotor 22 ist über seine Abtriebswelle mit einem Zahnrad 23 verbunden. Das Zahnrad 23 steht im Eingriff mit einem zweiten Zahnrad, das an einem ersten Ende einer flexiblen Welle 40 angeordnet ist. Der Elektromotor 22, das erste Zahnrad 23 und das zweite Zahnrad 24 sind in dem Gehäuse 21 angeordnet, wobei durch eine Durchtrittsöffnung die flexible Welle 40 aus dem Gehäuse 21 heraustritt. Der Elektromotor 22 wird durch elektrische Energie angetrieben und erzeugt an seiner Ausgangswelle eine Drehbewegung, die wiederum über die Zahnräder 23 und 24 die flexible Welle 40 in eine Drehbewegung versetzt. Die Drehbewegung der flexiblen Welle 40 wird an die Abtriebseinheit 30 übertragen. Die Abtriebseinheit 30 umfasst ein Gehäuse 31, in dem eine erste Getriebestufe und eine zweite Getriebestufe angeordnet sind. Die erste Getriebestufe umfasst ein Schneckenrad 32 und ein Stirnrad 33. Die Drehbewegung der flexiblen Welle wird von dem Schneckenrad 32 auf das Stirnrad 33 übertragen. Über eine gemeinsame Welle des Stirnrads 33 und ein erstes Stirnrad 34 der zweiten Getriebestufe wird die Umdrehung auf die zweite Getriebestufe und damit auf das zweite Stirnrad der zweiten Getriebestufe 35 übertragen. Dieses zweite Stirnrad 35 ist über eine Kupplungseinrichtung 36 mit der Abtriebswelle 37 koppelbar. Die Kupplungseinrichtung 36 kann als Klauenkupplung oder als Stirnverzahnung ausgebildet sein und ist geeignet, die Abtriebswelle 37 drehfest mit dem zweiten Zahnrad 35 der zweiten Getriebestufe zu verbinden.

In Figur 2 ist eine Seitenansicht der Rangiereinrichtung dargestellt ohne Gehäuse. Die gleichen Bezugszeichen wie in Figur 1 beziffern die gleichen Bauteile. Aus Figur 2 ist der Aktuator 60 erkennbar, mit dem das zweite Stirnrad 35 der zweiten Getriebestufe mit der Abtriebswelle in Eingriff bringbar ist. Dieser Aktuator ist beispielhaft als Zylindermagnet ausgebildet. Darüber hinaus ist noch ein Drehzahlsensor 50 vorgesehen zur Bestimmung der Abtriebsdrehzahl der Rangiereinrichtung. Über die Abtriebswelle 37 ist die Rangiereinrichtung an eine Zwischenwelle des Getriebes angebunden.

## Patentansprüche

1. Rangiereinrichtung (10) für ein- oder mehrspurige Fahrzeuge, mit
- einem Elektromotor (22) und
- einer Abtriebseinrichtung (30), die mit einem Getriebe des Fahrzeugs derart koppelbar ist, dass mit Hilfe des Elektromotors (22) das Fahrzeug zumindest Rückwärts bewegbar ist
**dadurch gekennzeichnet, dass**
der Elektromotor (22) über eine biegsame Welle (40) mit der Abtriebseinrichtung (30) verbunden ist.

2. Rangiereinrichtung (10) nach Anspruch 1, **dadurch gekennzeichnet, dass**
eine Abtriebswelle des Elektromotors (22) über ein Zahnradpaar mit der biegsamen Welle (40) verbunden ist.

3. Rangiereinrichtung (10) nach einem der vorhergehenden Ansprüche 1 oder 2, **dadurch gekennzeichnet, dass**
die Abtriebseinheit (30) eine erste Getriebestufe (32, 33) und eine zweite Getriebestufe (34, 35) umfasst, wobei ein Drehmoment von der biegsamen Welle (40) zur ersten Getriebestufe (32, 33), von der ersten Getriebestufe (32, 33) zu der zweiten Getriebestufe (33, 34) und von der zweiten Getriebestufe (33, 34) zu einer Abtriebswelle (37) übertragbar ist.

4. Rangiereinrichtung (10) nach einem der vorhergehenden Ansprüche 1 bis 3, **dadurch gekennzeichnet, dass**
sie über einen Aktuator mit dem Getriebe des Fahrzeugs koppelbar und entkoppelbar ist.

5. Rangiereinrichtung (10) nach einem der vorhergehenden Ansprüche 1 bis 4, **dadurch gekennzeichnet, dass**
der Elektromotor (22) ein Anlasser-Motor zum Starten einer fahrzeugeigenen Brennkraftmaschine ist.

6. Rangiereinrichtung (10) nach einem der vorhergehenden Ansprüche, **dadurch gekennzeichnet, dass**
ein Funktionssperre vorgesehen ist, die eine Kopplung der Rangiereinrichtung (10) an das Getriebe des Fahrzeugs verhindert, wenn das Getriebe des Fahrzeugs nicht in einer Leerlaufstellung ist und eine Kopplung der Rangiereinrichtung an das Getriebe des Fahrzeugs zulässt, wenn das Getriebe in einer Leerlaufstellung ist.

7. Rangiereinrichtung (10) nach Anspruch 6, **dadurch gekennzeichnet, dass**
die Funktionssperre mechanisch oder elektrisch auf den Aktuator wirkt.

8. Rangiereinrichtung (10) nach einem der vorhergehenden Ansprüche, **dadurch gekennzeichnet, dass**
das die Abtriebseinrichtung (30) über eine Kupplungseinrichtung (36), insbesondere eine Klauenkupplung oder ein Stirnverzahnung mit dem Getriebe des Fahrzeugs in Verbindung bringbar ist.

9. Rangiereinrichtung (10) nach einem der vorhergehenden Ansprüche 3 bis 8, **dadurch gekennzeichnet, dass**
die erste Getriebestufe der Abtriebseinrichtung (30) als eine Schneckenradstufe ausgebildet ist.

10. Ein- oder Mehrspuriges Fahrzeug, insbesondere Motorrad mit einer Rangiereinrichtung (10) nach einem der vorhergehenden Ansprüche.

## Claims

1. A manoeuvring system (10) for single-track or multi-track vehicles, comprising
- an electric motor (22) and
- an output system (30) which can be coupled to a transmission of the vehicle such that the vehicle is movable at least backwards by means of the electric motor (22),
**characterised in that**
the electric motor (22) is connected to the output system (30) by a flexible shaft (40).

2. A manoeuvring system (10) according to claim 1, **characterised in that** an output shaft of the electric motor (22) is connected to the flexible shaft (40) by a gear pair.

3. A manoeuvring system (10) according to either of the preceding claims 1 or 2, **characterised in that**
the output unit (30) has a first transmission stage (32, 33) and a second transmission stage (34, 35), a torque being transmissible from the flexible shaft (40) to the first transmission stage (32, 33), from the first transmission stage (32, 33) to the second transmission stage (33, 34) and from the second transmission stage (33, 34) to an output shaft (37).

4. A manoeuvring system (10) according to any of the preceding claims 1 to 3, **characterised in that**
it can be coupled to and uncoupled from the transmission of the vehicle by an actuator.

5. A manoeuvring system (10) according to any of the preceding claims 1 to 4, **characterised in that**
the electric motor (22) is a starter motor for starting an internal combustion engine of the vehicle.

6. A manoeuvring system (10) according to any of the preceding claims, **characterised in that**
a function lock is provided which prevents the manoeuvring system (10) from being coupled to the transmission of the vehicle if the transmission of the vehicle is not in a neutral position, and which allows the manoeuvring system to be coupled to the transmission of the vehicle if the transmission is in a neutral position.

7. A manoeuvring system (10) according to claim 6, **characterised in that** the function lock acts mechanically or electrically on the actuator.

8. A manoeuvring system (10) according to any of the preceding claims, **characterised in that**
the output system (30) can be brought into connection with the transmission of the vehicle by a coupling device (36), especially by a dog clutch or by a spur gearing.

9. A manoeuvring system (10) according to any of the preceding claims 3 to 8, **characterised in that**
the first transmission stage of the output system (30) is configured as a worm-gear stage.

10. A single-track or multi-track vehicle, especially a motorcycle with a manoeuvring system (10) according to any of the preceding claims.

## Revendications

1. Dispositif de manoeuvre (10) destiné à des véhicules à une voie ou à plusieurs voies comprenant :
- un moteur électrique (22), et
- un dispositif entraîné (30) qui peut être couplé à la boîte de vitesse du véhicule de sorte que le moteur électrique (22) permette de déplacer le véhicule au moins en marche arrière,
**caractérisé en ce que**
le moteur électrique (22) est relié au dispositif entraîné (30) par l'intermédiaire d'un arbre flexible (40).

2. Dispositif de manoeuvre (10) conforme à la revendication 1, **caractérisé en ce que**
l'arbre de sortie du moteur électrique (22) est relié à l'arbre flexible (40) par l'intermédiaire d'une paire de roues dentées.

3. Dispositif de manoeuvre (10) conforme à l'une des revendications précédentes 1 ou 2,
**caractérisé en ce que**
l'unité entraînée (30) comprend un premier étage de transmission (32, 33) et un second étage de transmission (34, 35), un couple de rotation pouvant être transmis de l'arbre flexible (40) au premier étage de transmission (32, 33), du premier étage de transmission (32, 33) au second étage de transmission (33, 34) et du second étage de transmission (33, 34) à l'arbre de sortie (37).

4. Dispositif de manoeuvre (10) conforme à l'une des revendications précédentes 1 à 3,
**caractérisé en ce qu'**
il peut être couplé à ou désaccouplé de la boîte de vitesses du véhicule par l'intermédiaire d'un actionneur.

5. Dispositif de manoeuvre (10) conforme à l'une des revendications précédentes, 1 à 4,
**caractérisé en ce que**
le moteur électrique (22) est un moteur de démarrage permettant de faire démarrer le moteur d'un véhicule.

6. Dispositif de manoeuvre (10) conforme à l'une des revendications précédentes,
**caractérisé en ce qu'**
il est prévu un élément de blocage fonctionnel qui empêche l'accouplement du dispositif de manoeuvre (10) avec la boîte de vitesses du véhicule lorsque cette boîte de vitesses n'est pas en position de marche à vide, et autorise l'accouplement du dispositif de manoeuvre avec la boîte de vitesses du véhicule lorsque cette boîte de vitesses est en position de marche à vide.

7. Dispositif de manoeuvre (10) conforme à la revendication 6,
**caractérisé en ce que**
l'élément de blocage fonctionnel agit mécaniquement ou électriquement sur l'actionneur.

8. Dispositif de manoeuvre (10) conforme à l'une des revendications précédentes,
**caractérisé en ce que**
le dispositif entraîné (30) peut être mis en liaison avec la boîte de vitesses du véhicule par l'intermédiaire d'un dispositif d'accouplement (36), en particulier d'un accouplement à griffes d'un engrenage frontal.

9. Dispositif de manoeuvre (10) conforme à l'une des revendications précédentes 3 à 8,
**caractérisé en ce que**
le premier étage de transmission du dispositif entraîné (30) est réalisé sous la forme d'un étage à roue à denture hélicoïdale.

10. Véhicule à une ou à plusieurs voies, en particulier motocyclette équipée d'un dispositif de manoeuvre (10) conforme à l'une des revendications précédentes.
